(19) Europäisches Patentamt
European Patent Office
Office européen des brevets

(11) EP 4 769 096 A1

(12) EUROPEAN PATENT APPLICATION

(43) Date of publication:
01.07.2026 Bulletin 2026/27

(51) International Patent Classification (IPC):
G06F 3/04817 (2022.01)   B60K 35/10 (2024.01)
G06F 3/01 (2006.01)   G06F 3/0482 (2013.01)
G06F 3/04842 (2022.01)

(21) Application number: 25227282.8

(22) Date of filing: 26.12.2025

(52) Cooperative Patent Classification (CPC):
G06F 3/04842; B60K 35/10; B60K 35/22;
B60K 35/29; G06F 3/013; G06F 3/04817;
G06F 3/0482; B60K 2360/115; B60K 2360/149

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 27.12.2024 FR 2415340

(71) Applicant: Faurecia Clarion Electronics Europe
75012 Paris (FR)

(72) Inventors:
• PEGORIER, Nicolas
  95620 PARMAIN (FR)
• TUZAR, Gert-Dieter
  74564 CRAILSHEIM (DE)
• LIN, Qinglong
  60114 MERU CEDEX (FR)
• TRISCOS, Margot
  75012 PARIS (FR)

(74) Representative: Lavoix
2, place d'Estienne d'Orves
75441 Paris Cedex 09 (FR)

(54) **HUMAN-MACHINE INTERFACE SYSTEM FOR A MOTOR VEHICLE AND ASSOCIATED CONTROLLING METHOD**

(57)    A human machine interface system (10) for a motor vehicle comprising:
- a display (12) configured to display a main menu (22) comprising multiple icons (23), two adjacent icons being separated with a predetermined distance,
- an eye gaze detection system (14) comprising a predetermined angle error of detection and configured to detect an eye gaze position (15) on said display (12) of a user (11),
- a physical element (16) actionable by the user (11),
- a control unit (20) configured to receive
∘ at least one detection signal from said eye gaze detection system (14) to determine a selected icon depending on said eye gaze position (15) and to highlight said selected icon, and
∘ at least one command signal (19) from said physical element (16) to validate said selected icon ;

said predetermined distance being a function of said predetermined angle error of detection.

FIG.1

**Description**

The present invention concerns a human-machine interface (HMI) system for a motor vehicle.

The invention also concerns an associated method for controlling such a HMI system.

The invention also concerns a motor vehicle comprising such a HMI system controlled by such a method.

The present invention relates to the field of human-machine interaction systems, and more specifically human-machine interfaces.

In a manner known per se, machines need to interact with humans to work properly. This interaction is crucial in order to exploit the full potential provided by computer science in all fields.

Generally, a human controls a machine by providing a plurality of mechanical inputs, whether it is via a controller, a keyboard, or any other physical element configured to transform said mechanical inputs to electrical signals that can be processed by the machine.

Then, research in the field of human-machine interaction systems has explored other solutions, leading to the development of systems that enable humans to control machines using their eye gaze.

Such systems use image sensors configured to track the eye gaze in order to determine the position of said eye gaze on a display. Said systems are integrated into motor vehicles to allow for example the driver to interact with the car's dashboard without moving or being distracted from the road for too long.

The image sensors used in such systems generally use one of two types of categories of methods to perform eye gaze tracking. The first category of methods well known in the art are the appearance-based methods: in such methods, the image sensor is configured to recognize the direction of the eye gaze by recording the eye of a user, and perform a correlation between the recorded image and a set of prerecorded images included in the image sensor. The second category of methods are the model-based methods, where the image sensor firstly records the image of the user's eye before performing a feature extraction operation on said image. The extracted features are then compared to a plurality of near-eye images in order to model the geometry of the user's eye, which allows creating a 3D eye model of the user's eye and estimating the direction of the gaze via this model.

The known systems using eye gaze tracking are configured to display, for example on a car's dashboard, a predefined menu comprising different icons relating to different functions of the car and, via an image sensor that uses one of the two types of methods presented above, to detect the car driver's eye gaze on said dashboard, and to execute the function relating to the icon where the eye gaze position has been detected on the dashboard.

However, there is a need to improve known systems and to design a HMI system based on eye gaze detection that offers more flexibility of display and maneuverability depending on the accuracy of said eye gaze detection.

To this end, the present invention related to a HMI system according to claim 1. Advantageously, by modifying the distance between two adjacent icons displayed depending on the angle error of detection, eye gaze tracking becomes more accurate and more intuitive for the user. More specifically, the proposed human-machine interface system allows efficient monitoring of the display, by avoiding the control unit to determine a wrong selected icon.

According to other advantageous aspects of the invention, the HMI system comprises one or several of the features according to claims 2 to 6.

The invention also concerns a method for controlling according to claim 7. According to other advantageous aspects of the invention, the method comprises one or several of the features according to claims 8 and 9.

The invention also relates to a motor vehicle according to claim 10.

These features and advantages of the invention will appear upon reading the following description, provided solely as a non-limiting example, and done in reference to the appended drawings, in which:

Figure 1 is a schematic view of an HMI system according to the invention, said HMI system being controlled by a user;

Figure 2 is a schematic view of the operation of an HMI system according to the invention;

Figure 3 is a schematic view showing the relation between an angle error of detection and a detection error;

Figure 4 is a schematic view of a display of a main menu and its related parameters;

Figure 5 is a schematic view of a display of a sub-menu comprising a list of sub-icons and a return icon, and

Figure 6 is a flowchart of a method according to the invention for controlling a HMI system, said method being implemented by the HMI system shown on figure 2.

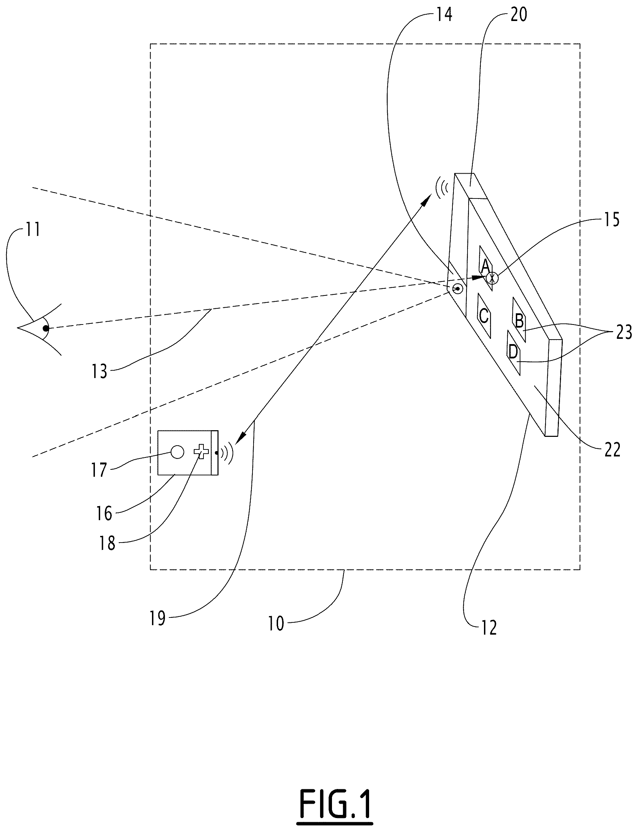

A HMI system 10 controlled by an eye of a user 11 is described hereafter with respect to figure 1.

The HMI system 10 is for example integrated in a transport vehicle, e.g. a car, and may be used by a user, driver or passenger.

The HMI system described is not limited to an application to transport vehicles, and may be for example part of a home multimedia system.

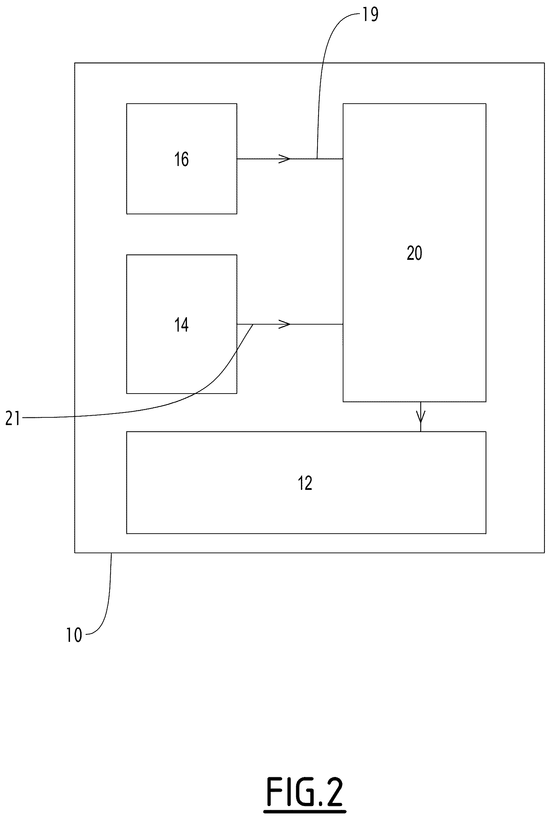

The HMI system 10 comprises a display 12, an eye gaze detection system 14, a physical element 16 and a control unit 20 as shown on figure 2.

The user 11 controls the HMI system by looking at the display 12 using his eye gaze, according to the direction of the eye gaze 13.

The display 12 is configured to display a main menu 22 comprising a plurality of icons 23, each icon being associated to a main function implemented by the HMI system 10.

For example, the display 12 is a car dashboard, and the main menu 22 displayed on the display 12 comprises icons 23 relating to navigation, music, radio and parameters.

The display 12 is further configured to display said icons 23 horizontally, or vertically, or horizontally and vertically, said icons 23 being for example squares of same side length $l$.

According to an example shown in figure 1, the main menu 22 displayed on the display 12 comprises four square icons A, B, C, and D of equal side lengths $l$, displayed horizontally and vertically.

Alternatively, the icons may have other geometrical shapes.

The display 12 is further configured to display two adjacent icons with a distance d greater than a minimal distance $d_{min}$.

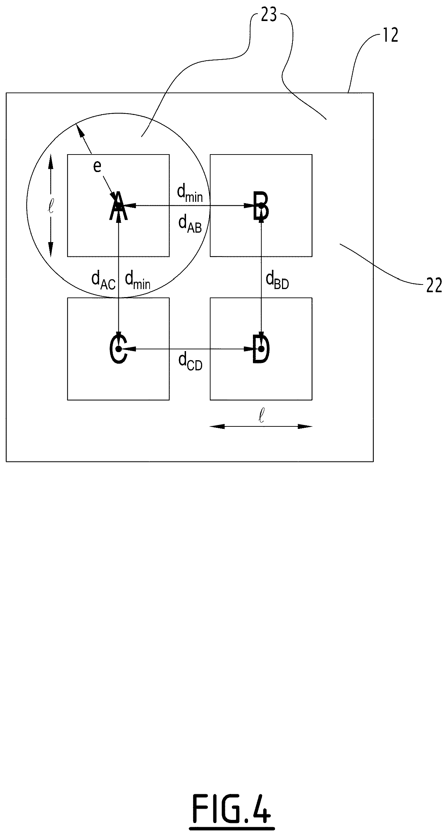

The distance d between two adjacent icons is the distance in display plan between the centers of two vertically or horizontally adjacent icons, as shown on figure 4 with distances $d_{AB}$, $d_{CD}$, $d_{AC}$ and $d_{BD}$.

In other words, the icons of any pair of adjacent icons, respectively (A,B), (C,D) which are horizontally adjacent, and (A,C), (B,D) which are vertically adjacent in the example of figure 4, are respectively separated by distances $d_{AB}$, $d_{CD}$, $d_{AC}$ and $d_{BD}$ all greater than or equal to said minimal distance $d_{min}$.

In the example shown on figure 4, each distance $d_{AB}$, $d_{CD}$, $d_{AC}$ and $d_{BD}$ between adjacent icons displayed is equal to the minimal distance $d_{min}$.

The eye gaze detection system 14 is configured to detect the eye gaze position 15 of the eye gaze 13 on the display 12 by recording at least one image of the eye of the user 11. The eye gaze detection methods applied to the eye gaze detection system 14 of the present invention, could be feature-based methods, or appearance-based methods or 3D model-based methods.

The feature-based methods involve detecting and tracking specific features of the eye, such as the pupil, iris, and corneal reflections. Algorithms analyze these features to determine the direction of the gaze.

The appearance-based methods use machine learning techniques to analyze the appearance of the eye region in images. Convolutional Neural Networks (CNNs) are often employed to learn patterns and predict gaze direction based on the visual input. This approach can be more robust to variations in lighting and head position.

The 3D model-based methods create a 3D model of the eye and its surrounding structures. By tracking the movement of the eye in three dimensions, these methods can provide highly accurate gaze estimation.

For example, the eye gaze detection system 14 comprises an image sensor or a built-in camera, oriented towards the user, and an associated image processing unit which processes images captured by the image sensor. For example, the eye gaze detection system 14 is integrated in a DMS ("Driver Monitoring System") or an OMS ("Occupant Monitoring System").

The eye gaze detection system 14 comprises a predetermined angle error of detection $\varepsilon$ and a predetermined speed of detection $\alpha$ of the eye gaze position 15 on the display 12.

The predetermined angle error of detection $\varepsilon$ is the angle between the direction of the eye gaze 13 and the detected direction of the eye gaze. The detected direction of the eye gaze is the direction between the eye of the user 11 and the eye gaze position 15 detected by the eye gaze detection system 14 on the display 12.

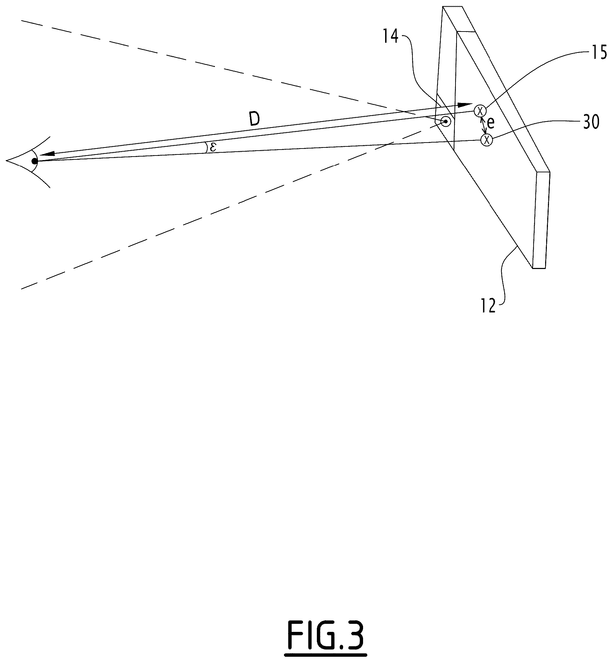

In other words, the predetermined angle error of detection $\varepsilon$ is the angle corresponding to the detection error between the eye gaze position 15 detected by the eye gaze detection system 14 and a real eye gaze position 30 on the display 12, as shown on figure 3.

The predetermined angle error of detection $\varepsilon$ of the eye gaze detection system 14 is for example comprised between 0.1° and 2°, and preferably less than 2°.

Furthermore, the minimal distance $d_{min}$ between two adjacent icons displayed on the display 12 is determined in function of the predetermined angle error of detection $\varepsilon$.

A detection error e on the display may be expressed in function of the distance $D$ between the user's eye and the display 12 and of the predetermined angle error of detection $\varepsilon$ as:

[MATH 1]

$$e = D \times \tan(\varepsilon)$$

For example, for a predetermined angle error of detection $\varepsilon$ = 0.5° and a distance $D$ = 1 m, the detection error on the display is $e$ = 8.7 mm.

Moreover, for a predetermined angle error of detection $\varepsilon$ = 1° and a distance $D$ = 1 m, the detection error on the display is $e$ = 17.5 mm.

Then, the given formula for calculating $d_{min}$ depends on the numerical values of the parameters $l$ and $e$.

On the one hand, if $\frac{l}{2} < e$, as shown on figure 4, the predetermined distance $d_{min}$ may be directly expressed as follows:

[MATH 2]

$$d_{min} = \frac{l}{2} + e = \frac{l}{2} + D \times \tan(\varepsilon)$$

For example, for a detection error $e$ = 17.5 mm and an icon side length $l$ = 20 mm, the minimal distance between two horizontally or vertically adjacent icons is $d_{min}$ = 27.5 mm.

On the other hand, if $\frac{l}{2} \geq e$, then using the formula hereof would result in two adjacent icons overlapping ($d_{min} \leq l$).

Since the surface of the display 12 is by definition limited, increasing the minimal distance $d_{min}$ between two adjacent icons 23 shall reduce the number of icons 23 displayed simultaneously on the display 12.

As a result, the minimal distance $d_{min}$ between two adjacent icons 23 shall be well adjusted to obtain a balance between having an optimal predetermined speed of detection $\alpha$ and displaying an adequate number of icons 23 on the display 12.

Advantageously, the HMI system 10 further comprises a means for activating or deactivating the eye gaze detection system 14.

Such means is for example a button, a dedicated icon on the display 12, or a voice command.

This feature therefore allows the user 11 to tailor the use of the eye gaze detection system 14 to his preferences, and in particular, to avoid the eye gaze detection system 14 being activated when there is no need.

According to an example, the physical element 16 comprises a push button 17 and a rotary button 18. According to another example, the physical element 16 comprises a push button 17.

Alternatively, the physical element 16 comprises a roller or an optic sensor.

The physical element 16 is configured to be actionable by the user 11, and to emit a command signal 19 each time it is actuated by the user 11.

The physical element 16 is for example a set of commands built-in a car, preferably close to the driving wheel to be easy to manipulate by the driver.

The command signal 19 comprises either a validation command if the user 11 actuates the push button 17 or a rotary command if the user 11 actuates the rotary button 18.

If the physical element 16 is a remote control element as shown on figure 1, the command signal 19 is transmitted via an integrated wireless network.

Alternatively, if the physical element 16 is a built-in set of commands, for example in a car, the command signal 19 is transmitted via an integrated wired network.

For example, if the user 11 actuates the push button 17, the command signal 19 shall comprise a validation command, and if the user 11 actuates the left button of the rotary button 18, the command signal 19 shall comprise a rotary command, for example "left".

The control unit 20 is configured to determine the icon 23 selected by the user 11, by processing a detection signal 21 received from the eye gaze detection system 14.

Once a selected icon is determined, the control unit 20 is configured to highlight said selected icon on the display 12.

The control unit 20 is further configured to receive at least one command signal 19 from the physical element 16. If the control unit 20 receives a command signal 19 from the physical element 16 comprising a validation command while a selected icon is highlighted on the display 12, the control unit 20 is adapted to validate said selected icon.

By "validate said selected icon", it is meant to execute the main function associated to said selected icon.

For example, if the control unit 20 validates an icon relating to music, the control unit 20 executes the function related to music.

According to an alternative embodiment of the invention, the control unit 20 is configured to validate a selected icon automatically.

By "validate a selected icon automatically", it is meant validating a selected icon after a predetermined time after highlighting said selected icon on the display.

Advantageously, the detection signal 21 comprises information relating to the distance D between the eye of the user 11 and the eye gaze position 15 detected by the eye gaze detection system 14, and relating to the predetermined angle error of detection $\varepsilon$.

On the example shown on figure 1 and figure 3, the user 11 looks at the position of icon A on the display 12, as indicated by the direction of the eye gaze 13. The eye gaze detection system 14 detects the eye gaze position 15 on the display 12, and sends a detection signal 21 to the control unit 20. The eye gaze position 15 intersects the icon surface A.

The control unit 20 then determines icon A as the selected icon after processing said detection signal 21, and highlights icon A on the display 12. The control unit 20 then receives the command signal 19 comprising a validation command from the push button 17 of the physical element 16, and validates icon A.

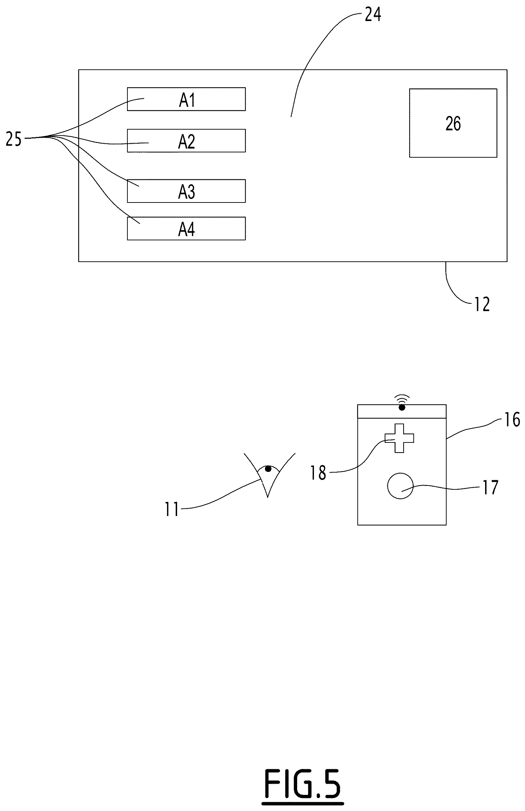

According to an embodiment of the invention shown on figure 5, after the control unit 20 validated an icon, the control unit 20 is further configured to command the display 12 to display a sub-menu 24 comprising a list of sub-icons 25, and a return icon 26.

The return icon 26 is distinct from all the other icons or sub-icons.

The list of sub-icons 25 comprises a plurality of sub-icons associated to sub-functions of the main function associated to the validated icon.

For example, if the control unit 20 validates an icon associated to the music function, the control unit 20 shall command the display 12 to display a list of sub-icons 25 associated to said music function, for example a list of songs.

On the example shown on figure 5, after the control unit 20 validated icon A, the control unit 20 commands the display 12 to display a list of sub-icons $A_1$, $A_2$, $A_3$, $A_4$, and a return icon 26.

The control unit 20 is further configured to receive at least one command from the physical element 16 to select and validate a sub-icon 25 in the list of sub-icons 25.

Advantageously, while the sub-menu 24 is displayed on the display 12, the control unit is configured to receive a plurality of rotary commands comprised in a plurality of command signals 19 to navigate through the sub-menu 24 and to select a sub-icon 25. The control unit 20 is then adapted and to receive a validation command comprised in a command signal 19 to validate the selected sub-icon 25.

The control unit 20 is further configured to command the display 12 to revert to display the main menu 22, when the control unit 20 receives a detection signal 21 from the eye detection system 14 indicating that an eye gaze position 15 was detected on the return icon 26 on the display 12.

Advantageously, the return icon 26 is used to exit a sub-menu 24 and to display back the main menu 22.

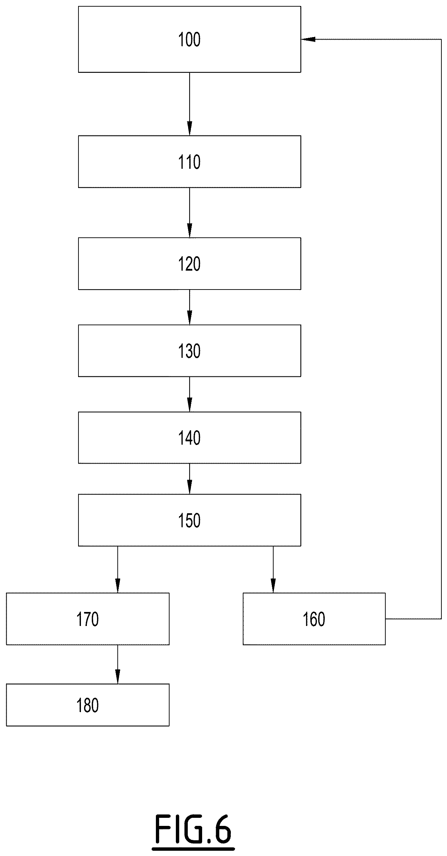

The operation of the HMI system 10 shall now be explained in reference to figure 6, showing a flowchart of the steps of a method for controlling said HMI system 10, said method being implemented by said HMI system 10.

During an initial display step 100, a main menu 22 comprising a plurality of main icons 23 is displayed on the display of the HMI system 10. The control unit 20 is configured to command the display 12 to display two adjacent icons with a predetermined distance depending on a predetermined angle error of detection.

During a following detection step 110, the eye gaze detection system 14 detects an eye gaze position 15 on the display 12. The eye gaze detection system 14 records the distance $D$ between the user 11 and the eye gaze position 15, as well as an image of the eye of the user 11. The eye gaze detection system 14 then delivers a detection signal 21 to the control unit 20 comprising said distance $D$ and the eye gaze position 15 on said display 12.

During a following determination step 120, the control unit 20 receives the detection signal 21 and determines a selected icon, depending on the information comprised in the detection signal 21.

During a following highlighting step 130, the control unit 20 commands the display 12 to highlight said selected icon.

During a following validation step 140, the control unit 20 receives a validation command comprised in the command signal 19 from the physical element 16 while said selected icon is highlighted, and validates said selected icon.

According to an alternative embodiment of the invention, during the validation step 140, the control unit validates said selected icon after a predetermined time after the highlighting step 130.

Then, during a following sub-menu display step 150, the control unit 20 commands the display 12 to display the sub-menu 24 comprising the list of sub-icons 25 associated with said selected icon.

During a reversion step 160, the eye gaze detection system 14 detects an eye gaze position 15 on the return icon 26, and the control unit 20 commands the display 12 to revert to display the main menu 22 as performed during step 100.

During a selection step 170, the control unit 20 receives a plurality of rotary commands comprised in a plurality of command signals 19 from the rotary button 18 of the physical element 16, and the control unit 20 selects a selected sub-icon in the list of sub-icons 25.

Then, during a sub-icon validation step 180 following the selection step 170, the control unit 20 receives a validation command comprised in a command signal 19 from the push button 17 of the physical element 16, and the control unit 20 validates the sub-icon 25 selected during step 170.

According to an alternative embodiment of the invention, the reversion step 160 is carried out while step 170 or step 180 is performed.

Advantageously, therefore, by adapting the display of the main menu 22 in a way where the distance between two icons 23 is a function of the predetermined angle error of detection, the detection step 110 becomes more efficient and accurate. The user 11 is not obliged to look multiple times at the display 12 to select the right icon 23, and if the HMI system 10 is integrated in a car vehicle and used by a driver while driving, such operation brings safety during usage.

In addition, advantageously, implementing a predetermined distance between two adjacent icons, based on the margin of error of the eye gaze detection system 14, improves user experience. As a matter of fact, this implies that the control unit 20 is less likely to determine a selected icon that was not intended to be selected by the user 11 in the first place, due to eye blinks, micro-shifts in gaze, or other 'noises' that could interfere with the operation of the eye gaze detection system 14.

**Claims**

1. A human machine interface (HMI) system (10) for a motor vehicle comprising :

   - a display (12) configured to display a main menu (22) comprising a plurality of icons (23) associated to main functions, two adjacent icons being separated with a predetermined distance,
   - an eye gaze detection system (14) configured to detect an eye gaze position (15) on said display (12) of a user (11) of said HMI system (10), said eye gaze detection system (14) comprising a predetermined angle error of detection,
   - a physical element (16) actionable by the user (11),
   - a control unit (20) configured to receive

      ◦ at least one detection signal (21) from said eye gaze detection system (14) to determine a selected icon depending on said eye gaze position (15) on said display (12) and to highlight said selected icon on said display (12), and
      ◦ at least one command signal (19) from said physical element (16) to validate said selected icon while said selected icon is highlighted ;

   wherein said predetermined distance is a function of said predetermined angle error of detection.

2. The HMI system according to claim 1, wherein the control unit (20) is further configured to command the display (12) to display a sub-menu (24) comprising a list of sub-icons (25) of said selected icon and a return icon (26), when said selected icon is validated, and to receive at least one command signal (19) from said physical element (16) to select and validate a sub-icon from said list of sub-icons (25).

3. The HMI system according to claim 2, wherein the control unit (20) is further configured to command the display (12) to revert to display said main menu (22) when an eye gaze position (15) is detected on said return icon (26).

4. The HMI system according to any one of the preceding claims, wherein said physical element (16) is a controller comprising at least one item among a push button (17), a rotary button (18), a roller, and an optic sensor.

5. The HMI system according to claims 1 to 4, wherein each icon of a pair of two adjacent icons has a side length, and wherein said given predetermined distance is at least equal to a minimal distance computed in function of said side length and a detection error, the detection error being a function of said predetermined angle error of detection and a distance between the detected eye gaze position (15) on said display (12) and the eye position of the user (11).

6. The HMI system according to any one of the preceding claims, further comprising a means for activating or deactivating the eye gaze detection system (14).

7. Method for controlling a human machine interface (HMI), implemented by a HMI system (10) according to any one of the preceding claims, said method comprising :

   - displaying (100) on said display (12) said main menu (22) comprising said plurality of icons (23) associated to main functions, two adjacent icons being separated with said predetermined distance,
   - detecting (110) said eye gaze position (15) on said display (12) of said user (11) of said HMI system (10) as a function of said predetermined angle error of detection,
   - determining (120) a selected icon depending on said eye gaze position (15) on said display (12),
   - highlighting (130) said selected icon on said display (12), and
   - validating (140) said selected icon depending on at least one command signal (19) from said physical element (16) while said selected icon is highlighted;

wherein said predetermined distance is a function of said predetermined angle error of detection.

8. Method according to claim 7, further comprising, after validating said selected icon, displaying (150) a sub-menu (24) comprising a list of sub-icons (25) of said selected icon and a return icon (26), and selecting (170) a sub-icon from said list of sub-icons (25) depending on at least one command signal (19) from said physical element (16), and validating (180) said sub-icon depending on one command signal (19) from said physical element (16).

9. Method according to claim 8, further comprising reverting (160) to display said main menu (22) when an eye gaze position (15) is detected on said return icon (26).

10. Motor vehicle comprising an HMI system (10) according to claims 1 to 6 suitable for implementing a method according to claims 7 to 9.

## FIG.1

FIG.2

## FIG.3

FIG.4

FIG.5

FIG.6

Europäisches
Patentamt
European
Patent Office
Office européen
des brevets

# EUROPEAN SEARCH REPORT

**Application Number**

EP 25 22 7282

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2017/351327 A1 (YASUDA RYOUHEI [JP] ET AL) 7 December 2017 (2017-12-07) <br> * paragraphs [0038] - [0066] * <br> * paragraphs [0250] - [0251] * <br> * figures 1-2 * | 1-10 | INV. <br> G06F3/04817 <br> B60K35/10 <br> G06F3/01 <br> G06F3/0482 <br> G06F3/04842 |
| Y | US 2015/234459 A1 (GEORGE-SVAHN ERLAND [SE] ET AL) 20 August 2015 (2015-08-20) <br> * paragraphs [0025] - [0044]; figures 1-2 * <br> * paragraph [0073] * | 1-10 | |
| A | US 2014/082557 A1 (WARNER PETER [FR]) 20 March 2014 (2014-03-20) <br> * paragraphs [0036] - [0045]; figures 1-5 * | 1-10 | |

**TECHNICAL FIELDS SEARCHED (IPC)**

G06F
B60K

The present search report has been drawn up for all claims

| Place of search | Date of completion of the search | Examiner |
|---|---|---|
| The Hague | 12 May 2026 | de Biolley, Luc |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 22 7282

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2026

| Patent document cited in search report | | | Publication date | Patent family member(s) | | | Publication date |
|---|---|---|---|---|---|---|---|
| US 2017351327 | A1 | | 07-12-2017 | EP | 3260951 | A1 | 27-12-2017 |
| | | | | JP | 2016151798 | A | 22-08-2016 |
| | | | | US | 2017351327 | A1 | 07-12-2017 |
| | | | | WO | 2016132884 | A1 | 25-08-2016 |
| US 2015234459 | A1 | | 20-08-2015 | US | 2015210292 | A1 | 30-07-2015 |
| | | | | US | 2015234459 | A1 | 20-08-2015 |
| | | | | US | 2017291613 | A1 | 12-10-2017 |
| | | | | US | 2018224933 | A1 | 09-08-2018 |
| | | | | US | 2019138090 | A1 | 09-05-2019 |
| | | | | US | 2019272030 | A1 | 05-09-2019 |
| US 2014082557 | A1 | | 20-03-2014 | AU | 2010254344 | A1 | 22-12-2011 |
| | | | | CN | 102449588 | A | 09-05-2012 |
| | | | | CN | 104657044 | A | 27-05-2015 |
| | | | | EP | 2435900 | A1 | 04-04-2012 |
| | | | | KR | 20120025487 | A | 15-03-2012 |
| | | | | US | 2010306702 | A1 | 02-12-2010 |
| | | | | US | 2014082557 | A1 | 20-03-2014 |
| | | | | WO | 2010138360 | A1 | 02-12-2010 |

EPO FORM P0459

For more details about this annex : see Official Journal of the European Patent Office, No. 12/82